# FASCICULE DE BREVET EUROPEEN

(11) **EP 3 137 399 B1**
(45) Date de publication et mention de la délivrance du brevet: **27.02.2019**
(21) Numéro de dépôt: 15719691.6
(22) Date de dépôt: 28.04.2015
(51) Int. Cl.: B65G 47/248, B07C 5/36

(54) **DISPOSITIF D'ANALYSE UNILATÉRALE DE PRODUITS PAR RETOURNEMENT ET DISPOSITIF DE CONVOYAGE ET DE TRI AUTOMATIQUE L'INCORPORANT**
VORRICHTUNG ZUR EINSEITIGEN ANALYSE VON PRODUKTEN DURCH DREHEN UND AUTOMATISCHE SORTIER- UND FÖRDERVORRICHTUNG DAMIT
DEVICE FOR UNILATERAL ANALYSIS OF PRODUCTS BY TURNING AND AUTOMATIC SORTING AND CONVEYING DEVICE INCORPORATING SAME

(30) Priorité: 30.04.2014 FR 1453965
(43) Date de publication de la demande: 08.03.2017
(73) Titulaire: MAF Agrobotic, 82000 Montauban (FR)
(72) Inventeur: BLANC, Philippe, F-82000 Montauban (FR)
(74) Mandataire: Cabinet BARRE LAFORGUE & associés
(86) Numéro de dépôt international: PCT/EP2015/059213
(87) Numéro de publication internationale: WO 2015/165905

(56) Documents cités:
- EP-A1- 0 993 877
- WO-A1-98/37001
- US-A1- 2001 030 103

## Description

L'invention concerne un dispositif d'analyse unilatérale -notamment optique- de produits (en particulier de produits volumineux et/ou allongés (non plans, c'est-à-dire présentant des formes autres que celles d'une plaque), tels que des fruits ou légumes, par exemple poires, pommes de terre, carottes, avocats, tomates, pêches, concombres...) comprenant un dispositif de retournement des produits entre deux postes d'analyse unilatérale -notamment optique- successifs. Elle s'étend à un dispositif de convoyage et de tri automatique de produits comprenant un tel dispositif d'analyse unilatérale -notamment optique-des produits et un dispositif de tri des produits selon des critères de sélection prédéterminés et en fonction de signaux d'analyse des produits notamment délivrés par le dispositif d'analyse unilatérale -notamment optique-.

Dans tout le texte on désigne par « dispositif d'analyse unilatérale » tout dispositif d'analyse qui est disposé d'un côté d'un produit à analyser, et permet une analyse dont le résultat dépend de l'orientation du produit par rapport au dispositif d'analyse (récepteur ou capteur tel qu'une caméra). L'analyse optique (y compris infrarouges, ultraviolets, et domaine visible) est souvent une analyse unilatérale (analyse optique par réflexion, imagerie, colorimétrie, analyse optique de contour par ombrage...), seul le côté du produit vu par le dispositif d'analyse optique étant analysé, l'autre côté du produit, opposé au dispositif d'analyse, n'étant pas analysé.

L'analyse optique des produits en vue de leur tri automatique suppose de pouvoir réaliser des investigations par voie optique (notamment prises de vues, spectrométrie...) à partir de toute la surface extérieure de chaque produit. Pour ce faire, on connaît des dispositifs de tri automatique comprenant un dispositif de convoyage des produits comprenant des rouleaux de support des produits et un dispositif d'entraînement en rotation des produits portés par les rouleaux (cf. notamment FR 2874425).

Ces dispositifs connus permettent d'éviter la multiplication des dispositifs d'analyse optique (selon les différents angles d'analyse requis). Il est à noter à ce titre qu'il n'est pas possible en pratique de prévoir des dispositifs d'analyse optique situés sous le dispositif de convoyage, même si ce dernier pouvait être adapté pour permettre l'analyse optique par le dessous. En effet, outre les coûts associés, une analyse optique de produits tels que des fruits ou légumes par le dessous n'est pas compatible avec les impératifs de construction du dispositif de convoyage, et devient inéluctablement rapidement inopérante suite à la salissure inévitable d'un dispositif d'analyse optique qui serait situé sous le dispositif de convoyage.

Les dispositifs connus susmentionnés supposent de pouvoir entraîner les produits en rotation sur eux-mêmes entre les postes d'analyse unilatérale -notamment optique-, ce qui n'est pas toujours possible, notamment dans le cas de produits non globalement sphériques (poires, avocats, légumes allongés...) et dans le cas de produits particulièrement fragiles (poires mûres, oeufs, pêches mûres, tomates,...). Il est à noter en particulier que dans le cas de produits dont la forme est tortueuse et variable, tels que des poires, il est par ailleurs très difficile de maîtriser l'orientation de chaque produit par rapport au dispositif de convoyage. En particulier, il est quasiment impossible de déterminer la position et l'orientation du pédoncule d'un fruit tel qu'une poire. Or, de nombreux défauts sont susceptibles d'être présents au niveau du pédoncule du fruit, qui devrait donc faire l'objet d'une analyse unilatérale -notamment optique- particulièrement précise.

EP 993877 décrit un dispositif de retournement de produits selon le préambule de la revendication 1, formé de deux leviers de support délimitant entre eux un espace de retenue d'un produit et basculant simultanément pour prélever un produit d'un convoyeur et le déposer après retournement sur un autre convoyeur. Ce dispositif de retournement est également limité à des produits de formes, orientation et calibres relativement constants et similaires, correspondant aux formes et aux dimensions de l'espace de retenue délimité entre les deux leviers de support, dont les formes et dimensions sont adaptées à cet effet. Or, l'analyse unilatérale -notamment optique- des produits intervient avant leur tri, de sorte que les produits qui sont alimentés par un convoyeur vers des postes d'analyse unilatérale -notamment optique- peuvent présenter des formes, des calibres et des orientations très diverses. En conséquence, un tel dispositif de retournement à deux leviers basculant n'est pas exploité en pratique. En outre, ce dispositif de retournement impose que la position et le basculement des leviers soient parfaitement synchronisés avec les convoyeurs transportant les produits. Autrement dit, ce dispositif de retournement est de type synchrone. Également, ce dispositif de retournement entraîne un retournement relativement brutal de chaque produit, avec un déplacement relatif de la surface de contact de chaque levier par rapport à celle des produits au cours du retournement. Il n'est donc pas adapté à des produits de formes et dimensions indéterminées et/ou très fragiles tels que des poires mûres, des avocats, des oeufs ou des pêches mûres...

L'invention vise donc à pallier ces inconvénients.

L'invention vise ainsi à proposer un dispositif d'analyse unilatérale -notamment optique- de produits comprenant un dispositif de retournement pouvant être utilisé en pratique pour le retournement de produits dont les formes (produits volumineux, globalement sphériques ou non sphériques et non plans, notamment allongés) et/ou les dimensions (calibre) et/ou l'orientation peuvent être variables, voire même quelconques.

L'invention vise également à proposer un tel dispositif d'analyse unilatérale -notamment optique- comprenant un dispositif de retournement pouvant être utilisé en pratique pour le retournement de produits dont les formes (produits volumineux, globalement sphériques ou non sphériques et non plans, notamment allongés) et/ou les dimensions (calibre) et/ou l'orientation ne sont pas préalablement déterminées ou connues avec précision.

L'invention vise également à proposer un tel dispositif d'analyse unilatérale -notamment optique- qui puisse être utilisé avec des produits particulièrement fragiles tels que des poires, des avocats, des pêches, des tomates, des oeufs ou autres produits similaires.

L'invention vise également à proposer un tel dispositif d'analyse unilatérale -notamment optique- qui puisse être utilisé en pratique de manière asynchrone, c'est-à-dire avec tout type de dispositif de convoyage, l'espacement entre les différents produits alimentant le dispositif d'analyse unilatérale -notamment optique- n'étant pas nécessairement maîtrisé.

L'invention vise également à proposer un tel dispositif qui soit compatible avec une utilisation dans un environnement agricole et à l'échelle industrielle.

Pour ce faire, l'invention concerne un dispositif d'analyse unilatérale -notamment optique- de produits selon de contenu de la revendication 1.

Le fait que chaque produit soit retourné dans la zone de retournement sous l'effet du basculement progressif de plusieurs leviers basculants permet en effet en pratique que la forme et les dimensions des leviers basculants ne soient pas nécessairement définies en fonction de la forme et les dimensions des produits, qui sont inconnues à l'avance. En outre, la position des leviers basculants et leur basculement peuvent être totalement désynchronisés de chaque convoyeur transportant les produits à l'amont et/ou à l'aval du dispositif d'analyse unilatérale - notamment optique-. Également, chaque produit étant saisi et retourné sous l'effet du basculement progressif de plusieurs leviers basculants de chaque côté, il est possible de prévoir et d'adapter un dispositif selon l'invention à des produits très fragiles.

Les deux séries de leviers basculants sont en opposition, et donc adaptées pour pouvoir recevoir et saisir les produits entre elles, les leviers basculants d'une série de leviers basculants étant d'un côté des produits, les leviers basculants de l'autre série de leviers basculants étant de l'autre côté des produits.

Ainsi, dans un dispositif selon l'invention, les leviers de chaque série sont disposés les uns par rapport aux autres et le dispositif de commande du basculement est agencé de telle sorte que dans la zone de retournement plusieurs leviers de chaque série sont entraînés en basculement progressif par le dispositif de commande.
Dans un dispositif selon l'invention, la cinématique de basculement des différents leviers basculants de chaque série peut faire l'objet de différentes variantes, notamment par rapport à la cinématique d'entraînement de chaque convoyeur. Par exemple, les leviers basculants peuvent être basculés par groupes. Néanmoins, avantageusement et selon l'invention, le dispositif de commande du basculement est agencé pour entraîner un basculement progressif des leviers basculants de chaque série, au moins dans le sens du retournement d'un produit. De préférence, chaque convoyeur est entraîné à défilement continu par rapport au bâti. Ainsi, le retournement d'un produit est extrêmement progressif, à la façon d'une chenille, et sans aucun risque de choc. De préférence, le dispositif de commande du basculement est aussi agencé pour entraîner un basculement progressif des leviers basculants de chaque série dans le sens de retour des leviers basculants en position initiale après retournement d'un produit. Avantageusement et selon l'invention, ce basculement progressif est assuré par des rampes du dispositif de commande du basculement fixées sur le bâti du dispositif selon l'invention et coopérant avec chacun des leviers basculants successivement au fur et à mesure de leur déplacement dans la direction longitudinale.

Par ailleurs, un dispositif selon l'invention est aussi caractérisé en ce que les leviers basculants de chaque série sont disposés les uns par rapport aux autres de façon que chaque produit puisse être supporté par plusieurs leviers basculants d'une même série successifs dans la direction longitudinale. En particulier, avantageusement et selon l'invention, les leviers basculants de chaque série de leviers sont écartés les uns des autres dans la direction longitudinale d'une distance inférieure à la plus petite dimension des produits de sorte que chaque produit est supporté (avant et après la zone de retournement) par au moins deux leviers basculants successifs d'une même série de leviers basculants.

Par ailleurs, avantageusement et selon l'invention, les leviers basculants de chaque série sont articulés selon des axes d'articulation orientés dans la zone de retournement parallèles à la direction longitudinale. Ainsi, le basculement des leviers basculants et le retournement des produits sont effectués par pivotement autour d'un axe parallèle à la direction longitudinale. Il est à noter que d'autres dispositions seraient possibles, par exemple avec des axes légèrement inclinés par rapport à la direction longitudinale.

En outre, avantageusement et selon l'invention, les leviers basculants de chaque série sont articulés selon des axes d'articulation confondus les uns aux autres dans la zone de retournement.

Dans un mode de réalisation particulièrement avantageux, et selon l'invention, les leviers basculants des deux séries sont articulés sur des supports communs d'un même convoyeur portant et entraînant les deux séries de leviers basculants. Avantageusement et selon l'invention, les leviers basculants des deux séries sont imbriqués les uns dans les autres individuellement ou par groupe, c'est-à-dire disposés alternativement dans la direction longitudinale d'un même convoyeur.

Par ailleurs, avantageusement et selon l'invention les leviers basculants des deux séries sont articulés selon des axes d'articulation confondus les uns aux autres dans la zone de retournement. De la sorte, la cinématique de basculement des leviers basculants est particulièrement simple et fiable, et n'entraîne aucun frottement des leviers basculants sur la surface extérieure des produits au cours du retournement de ces derniers.

Avantageusement et selon l'invention, au moins dans la zone de retournement, les leviers basculants constituent les seuls organes de transport des produits. En particulier, un dispositif selon l'invention ne nécessite pas l'alimentation des produits par un convoyeur à rouleaux ou à bicônes.

Selon l'invention chaque levier basculant forme un doigt transversal de support des produits. Ainsi, chaque levier basculant n'est pas en lui-même suffisant pour supporter un produit, et c'est la multiplicité des leviers basculants successifs en forme de doigts de convoyage qui permet de supporter chacun des produits. De la sorte, le dispositif selon l'invention est susceptible de recevoir tous types, toutes formes et toutes dimensions de produits compatibles avec la succession de leviers basculants formant des doigts de convoyage de chaque série, et assure un support optimal de chaque produit en toutes circonstances.

Dans un mode de réalisation préférentiel, avantageusement et selon l'invention, chaque levier basculant comprend :
- un doigt transversal présentant une face supérieure de support des produits et une face inférieure coopérant avec une rampe, dite rampe de retournement/saisie du dispositif de commande du basculement, ladite face inférieure et la dite rampe de retournement/saisie étant agencées pour, au fur et à mesure du déplacement longitudinal du levier basculant dans la zone de retournement, soulever et basculer ledit doigt transversal d'une position de support des produits vers une position de retournement/saisie des produits,
- et un talon coopérant avec une rampe, dite rampe d'ouverture/retournement du dispositif de commande du basculement, le talon et ladite rampe d'ouverture/retournement étant agencés pour, au fur et à mesure du déplacement longitudinal du levier dans la zone de retournement, soulever et basculer ledit doigt transversal d'une position de retournement/saisie des produits vers une position de support des produits.

Un dispositif selon l'invention permet ainsi de réaliser l'analyse unilatérale -notamment optique- de produits de formes et dimensions quelconques, y compris allongés ou de formes tourmentées (comme par exemple des pommes de terre), en réalisant par exemple des prises de vues de l'intégralité de la longueur des produits, sur toutes leur surface extérieure, y compris les extrémités fines qui sont sujettes à un maximum de défauts.

L'invention s'étend également à un dispositif de convoyage et de tri automatique de produits comprenant un dispositif d'analyse unilatérale - notamment optique- des produits, et un dispositif de tri des produits selon des critères de sélection prédéterminés et en fonction de signaux délivrés par le dispositif d'analyse unilatérale -notamment optique- des produits, caractérisé en ce qu'il comporte un dispositif d'analyse unilatérale -notamment optique- des produits selon l'invention. Un dispositif de convoyage et de tri automatique selon l'invention peut incorporer également d'autres dispositifs d'analyse des produits, par exemple un dispositif de pesage.

Dans une forme de réalisation particulière avantageuse et selon l'invention, le dispositif d'analyse unilatérale -notamment optique- des produits alimente un convoyeur de tri adapté pour recevoir les produits délivrés par le dispositif de retournement et comprenant des supports des produits ainsi que des moyens de déchargement sélectif des produits dans une zone de déchargement sélectionnée parmi une pluralité de zones de déchargement par une unité de commande en fonction desdits critères de sélection et des signaux délivrés par les différents dispositifs d'analyse. Ce convoyeur de tri peut être par exemple un convoyeur à doigts de convoyage basculant tel que décrit par exemple par EP810963. Il est à noter que dans ce cas il suffit que la distance entre les doigts de convoyage convoyeur de tri soit un multiple de celle séparant les leviers successifs de la série de leviers du dispositif de retournement coopérant avec ces doigts de convoyage.

L'invention concerne également un dispositif d'analyse unilatérale -notamment optique- de produits ainsi qu'un dispositif de convoyage et de tri automatique de produits caractérisés en combinaison par tout ou partie des caractéristiques mentionnées ci-dessus ou ci-après.

D'autres buts, caractéristiques et avantages de l'invention apparaîtront à la lecture de la description suivante d'un exemple de réalisation d'un dispositif d'analyse optique de produits selon l'invention, donnée à titre non limitatif, et qui se réfère aux figures annexées dans lesquelles :
- la figure 1 est une vue schématique partielle en perspective d'un dispositif d'analyse optique de produits selon l'invention (les rampes de commande du retournement n'étant pas représentées à des fins de clarté),
- la figure 2 est une vue schématique partielle en perspective représentant une première partie du dispositif de la figure 1 dans laquelle un produit reposant sur des leviers basculants d'une première série de leviers basculants du dispositif de retournement est soumis à une première analyse optique,
- la figure 3 est une vue schématique partielle en perspective représentant une deuxième partie du dispositif de la figure 1 dans laquelle des leviers d'une deuxième série de leviers basculants du dispositif de retournement sont basculés afin de saisir un produit,
- la figure 4 est une vue schématique partielle en perspective représentant une troisième partie du dispositif de la figure 1 dans laquelle les leviers basculants des deux séries de leviers basculants du dispositif de retournement sont en début de basculement afin de retourner un produit,

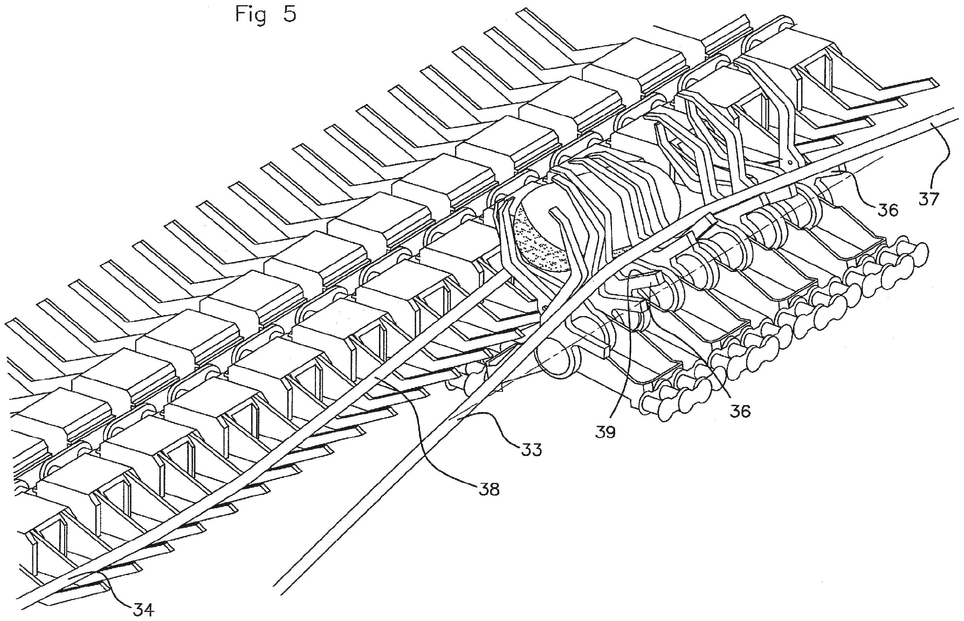

- la figure 5 est une vue schématique partielle en perspective représentant une quatrième partie du dispositif de la figure 1 dans laquelle les leviers basculants des deux séries de leviers basculants du dispositif de retournement sont en fin de basculement afin de retourner un produit,

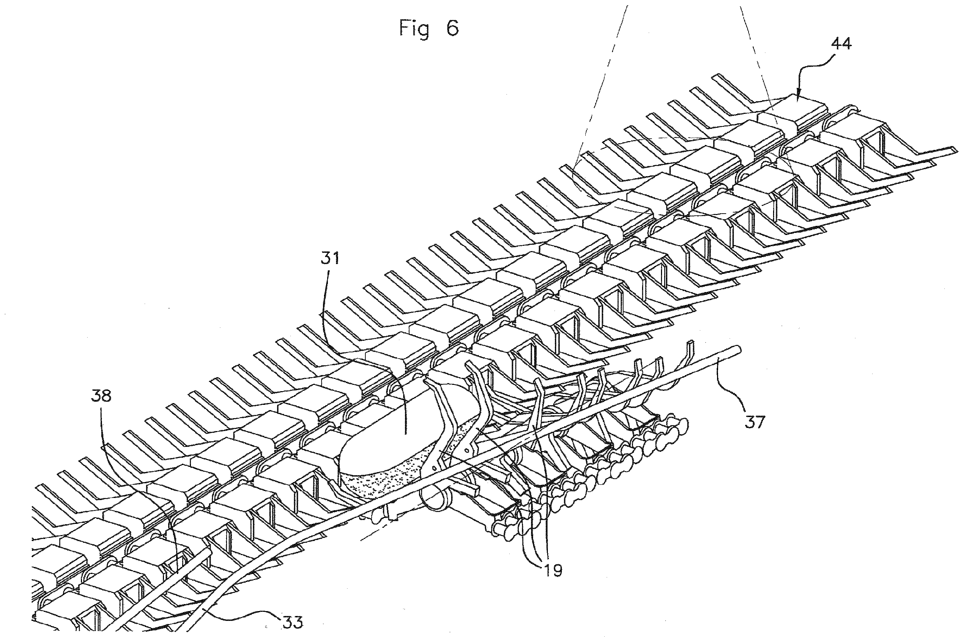

- la figure 6 est une vue schématique partielle en perspective représentant une cinquième partie du dispositif de la figure 1 dans laquelle le produit retourné est supporté par les leviers basculants de la deuxième série de leviers basculants du dispositif de retournement, et les leviers basculants de la première série de leviers basculants du dispositif de retournement sont en cours de basculement de retour vers leur position initiale de support d'un autre produit,
- la figure 7 est une vue schématique partielle en perspective représentant une sixième partie du dispositif de la figure 1 dans laquelle un produit reposant sur des leviers basculants de la deuxième série de leviers basculants du dispositif de retournement est soumis à une deuxième analyse optique.

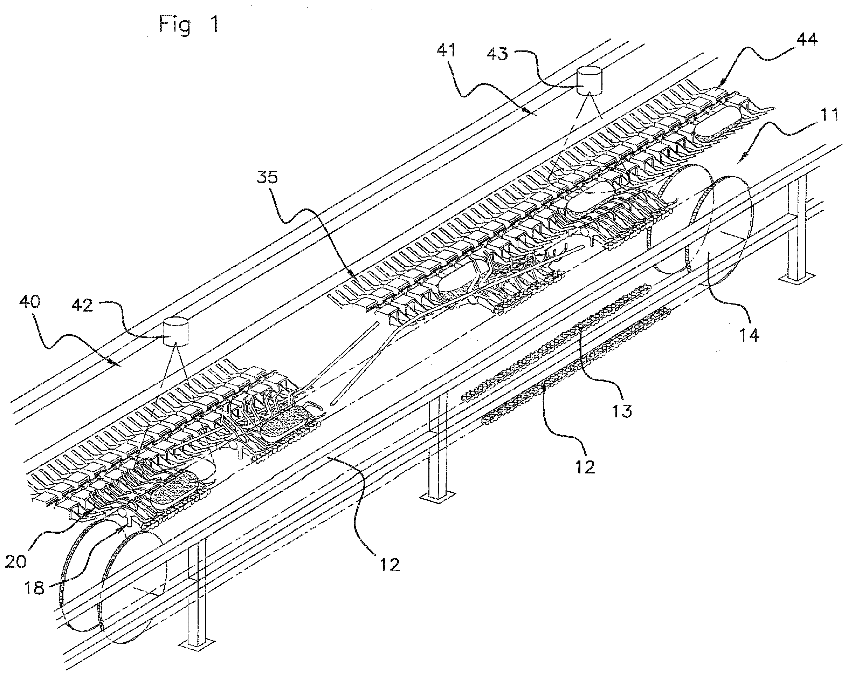

Un dispositif d'analyse optique de produits selon l'invention tel que représenté sur les figures comprend un convoyeur 11 de retournement qui, dans l'exemple, comprend deux chaînes 12, 13 sans fin en boucles parallèles entraînées à défilement continu en synchronisme (selon la flèche représentée figure 1) par des pignons 14 montés rotatifs par rapport à un bâti 30 fixe, et dont l'un au moins est entraîné par un moteur (non représenté).

Les deux chaînes 12, 13 forment un brin supérieur horizontal et portent et entraînent des supports 15 portant deux séries 18, 20 en opposition de leviers 19, 21 basculants. Les supports 15 sont formés de cavaliers 16 s'étendant, au niveau du brin supérieur, au-dessus des chaînes 12. Les cavaliers 16 sont en forme de cadres fixés par chacune de leurs extrémités transversales à deux axes de maillons de chacune des chaînes 12 par deux boulons 17. De la sorte les cavaliers 16 sont entraînés et orientés par les maillons des chaînes 12. Chaque cavalier 16 forme deux supports 15 s'étendant entre les deux chaînes 12, successifs et adjacents dans la direction longitudinale. Chaque support 15 porte en son centre (entre les deux chaînes 12) deux leviers 19, 21 basculants librement articulés au support 15 autour d'un même axe 22 parallèle à la direction longitudinale des chaînes 12.

Un premier levier 19 articulé à un support 15 appartient à une première série 18 de leviers basculants identiques articulés sur des supports 15 successifs le long du convoyeur 11, ces leviers 19 de la première série 18 s'étendant vers la première chaîne 12 lorsqu'ils sont en position de support d'une première face 31 de produits reposant sur ces leviers 19 de cette première série 18. Un deuxième levier 21 articulé au support 15 appartient à une deuxième série 20 de leviers basculants identiques articulés sur des supports 15 successifs le long du convoyeur 11, ces leviers 21 de la deuxième série 20 s'étendant vers la deuxième chaîne 13 lorsqu'ils sont en position de support d'une deuxième face 32 de produits, opposée à ladite première face 31, reposant sur ces leviers 21 de cette deuxième série 20.

Chaque levier 19, 21 basculant comprend un doigt 26 transversal s'étendant radialement à l'axe 22 et présentant une face 27 supérieure de support des produits et une face 28 inférieure agencée pour pouvoir coopérer avec une rampe de commande de basculement comme décrit ci-après plus en détail.

Le doigt 26 présente un ergot 29 de butée agencé pour coopérer avec le support 15 pour limiter la rotation vers le bas, à l'encontre de la gravité, du levier 19, 21 avec le doigt 26 en position sensiblement horizontale de support d'un produit reposant sur la face supérieure du doigt 26.

Chaque levier 19, 21 d'une série 18, 20 peut, dans une zone 35 de retournement du convoyeur 11, être basculé vers le haut par rotation autour de l'axe 22 à partir de la position de support des produits vers une position de retournement/saisie des produits au-dessus des leviers 21, 19 de l'autre série 20, 18. Pour ce faire, la face 28 inférieure du doigt 26 est adaptée pour coopérer avec une rampe, dite rampe 33, 34 de retournement/saisie, fixée au bâti 30 dans la zone 35 de retournement. Ladite face 28 inférieure et ladite rampe 33, 34 de retournement/saisie sont agencées pour, au fur et à mesure du déplacement longitudinal du levier 19, 21 dans la zone 35 de retournement, soulever et basculer ledit doigt 16 transversal, par rotation autour de l'axe 22 vers le haut et sur le coté, de ladite position de support des produits vers la position de retournement/saisie des produits. Ce faisant la face inférieure 28 du doigt 16 glisse le long de la rampe 33, 34 de retournement/saisie, cette dernière se rapprochant de la direction des axes 22 des supports 15. Une première rampe 33 de retournement/saisie coopère avec les leviers 19 de la première série 18 pour en commander le basculement de retournement depuis la position de support vers une position de retournement de produits au-dessus des leviers 21 de la deuxième série 20. Une deuxième rampe 34 de retournement/saisie coopère avec les leviers 21 de la deuxième série 20 pour en commander le basculement depuis la position de support vers une position de saisie de produits, au-dessus des leviers 19 de la première série 18.

Chaque levier 19, 21 d'une série 18, 20 peut, dans la zone 35 de retournement du convoyeur 11, être basculé en retour par rotation autour de l'axe 22 à partir de la position de retournement/saisie des produits vers la position de support des produits. Pour ce faire, chaque levier 19, 21 comporte un talon 36 solidaire en rotation du doigt 16 autour de l'axe 22 et agencé pour pouvoir coopérer avec une rampe, dite rampe 37, 38 d'ouverture/retournement, le talon 36 et ladite rampe 37, 38 d'ouverture/retournement étant agencés pour, au fur et à mesure du déplacement longitudinal du levier 19, 21 dans la zone 35 de retournement, soulever et basculer ledit doigt 16 transversal de la position de retournement/saisie des produits vers la position de support des produits. Le talon 36 présente une face 39 venant au contact de la rampe 37, 38 d'ouverture/retournement et glissant sur cette dernière.

Une première rampe 37 d'ouverture/retournement coopère avec les leviers 19 de la première série 18 pour en commander le basculement d'ouverture de la position de retournement des produits vers la position de support initiale. Une deuxième rampe 38 d'ouverture/retournement coopère avec les leviers 21 de la deuxième série 20 pour en commander le basculement de retournement de produits de la position de saisie vers la position de support de produits retournés.

Les différentes rampes 33, 34, 37, 38 sont fixées aux bâtis 30 et se succèdent dans la direction longitudinale de façon à entraîner la saisie puis le retournement de produits saisis entre une pluralité de leviers 19, 21 des deux séries 18, 20. De l'amont vers l'aval, les leviers 19, 21 rencontrent tout d'abord la deuxième rampe 34 de retournement/saisie qui bascule les leviers 21 de la deuxième série 20 en position de saisie d'un produit arrivant dans la zone 35 de retournement. Ensuite, les premiers leviers 19 et les deuxièmes leviers 21 coopèrent avec la première rampe 33 de retournement/saisie et, respectivement, avec la deuxième rampe 38 d'ouverture/retournement qui sont au moins sensiblement en regard l'une de l'autre pour entraîner le retournement des produits dans la zone 35 de retournement. Ensuite, les premiers leviers 19 coopèrent avec la première rampe 37 d'ouverture/retournement pour replacer ces leviers 19 en position de support.

L'inclinaison des différentes rampes 33, 34, 37, 38 est de préférence adaptée pour entraîner un basculement progressif des leviers au fur et à mesure de leurs déplacements dans la direction longitudinale, à la façon d'une chenille.

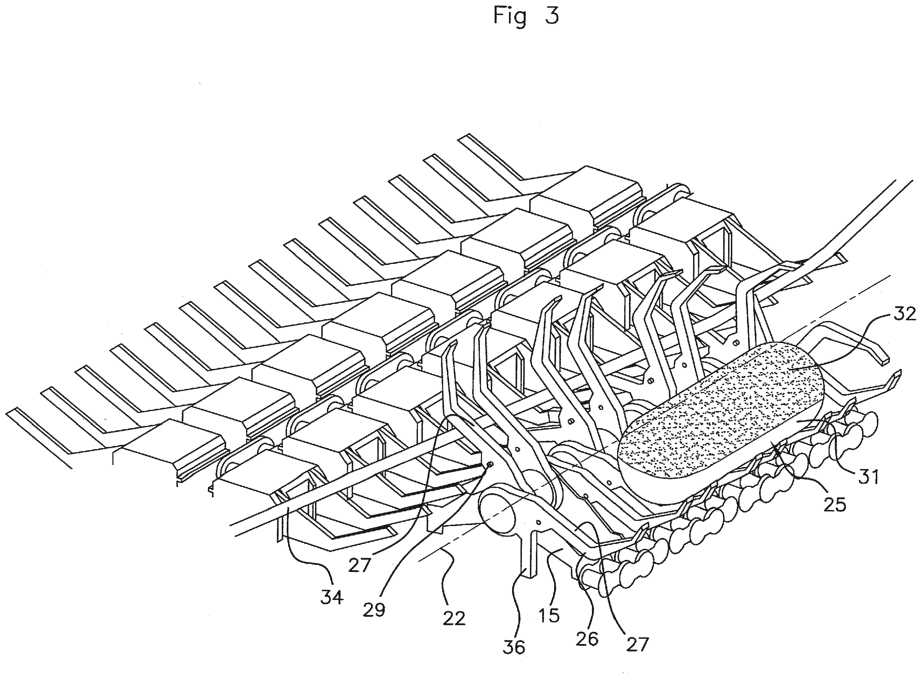

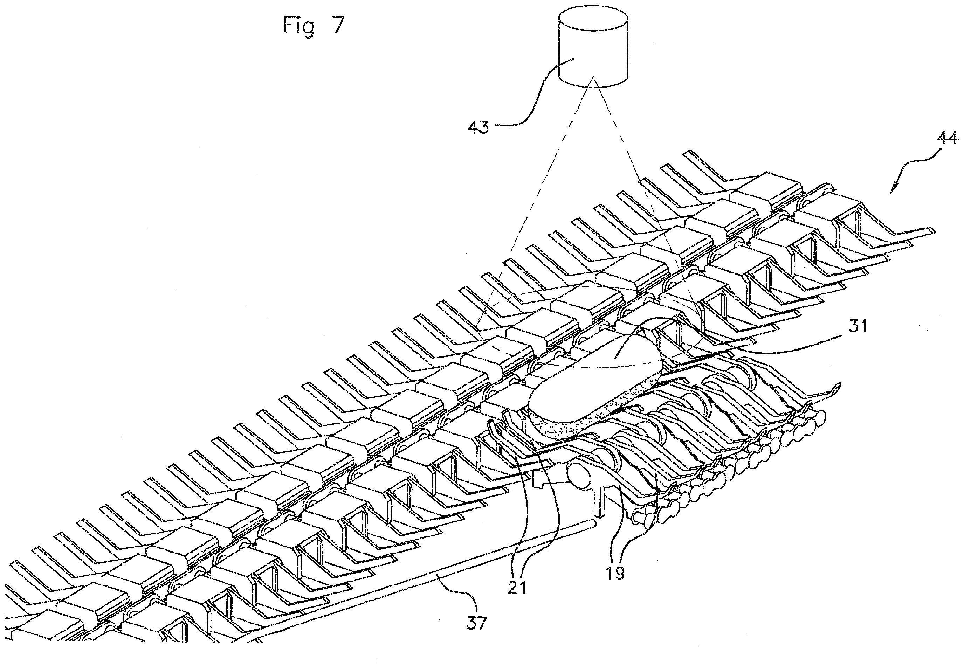

Il est à noter que l'espacement longitudinal entre deux leviers 19, 21 successifs adjacents est inférieur à la plus petite dimension des produits devant être analysés par un dispositif selon l'invention, de sorte que chaque produit est supporté à l'amont de la zone 35 de retournement, dans la zone 35 de retournement et à l'aval de la zone 35 de retournement par au moins deux leviers successifs 19 ou 21 d'une même série 18 ou 20 de leviers. Dans l'exemple représenté, un produit est supporté par six leviers 19 ou 21 de chaque série de leviers en position de support (figures 1, 2, 3, 7). Le nombre de leviers supportant chaque produit dépend de la dimension du produit, qui n'est pas connue à l'avance. On sait cependant que les produits à analyser doivent présenter une dimension longitudinale supérieure à une plus petite dimension prédéterminée. Cette plus petite dimension prédéterminée est par exemple de 5 cm pour des poires, l'écartement longitudinal entre deux leviers 19, 21 successifs étant alors par exemple de l'ordre de 2 à 3 cm. Il est également à noter que le dispositif selon l'invention permet de recevoir les produits dans une orientation quelconque, et de les retourner pour permettre leur analyse optique sur l'intégralité de leur surface extérieure.

Le dispositif d'analyse optique de produits selon l'invention comprend au moins un premier poste 40 d'analyse optique situé à l'amont de la zone 35 de retournement, et au moins un deuxième poste 41 d'analyse optique situé à l'aval de la zone 35 de retournement. Dans l'exemple représenté, chaque poste 40, 41 d'analyse optique comprend un dispositif optique monté fixe sur le bâti 30, tel qu'une caméra 42, 43, disposé au-dessus du convoyeur 11 de retournement et présentant un champ couvrant une zone d'analyse optique des produits de telle sorte que les produits transportés par le convoyeur 11 de retournement passent dans ledit champ pour pouvoir être analysés par le dispositif optique.

Ainsi, le premier poste 40 d'analyse optique comprend une caméra 42 dont le champ couvre les premiers leviers 19 de la première série 18 de leviers supportant la première face 31 de produits à l'amont de la zone 35 de recouvrement. En conséquence, ce premier poste 40 d'analyse optique réalise une analyse optique de la deuxième face 32 des produits orientée vers le haut lorsque ces derniers reposent par leur première face 31 sur les premiers leviers 19 basculants.

Le deuxième poste 41 d'analyse optique comprend une caméra 43 dont le champ couvre les deuxièmes leviers 21 de la deuxième série 20 de leviers supportant la deuxième face 32 de produits à l'aval de la zone 35 de recouvrement. En conséquence, ce deuxième poste 41 d'analyse optique réalise une analyse optique de la première face 31 des produits orientée vers le haut lorsque ces derniers reposent par leur deuxième face 32 sur les deuxièmes leviers 21 basculants, après avoir été retournés.

Ainsi, avec uniquement deux postes 40, 41 d'analyse optique successive dont les caméras 42, 43 sont situées au-dessus du convoyeur 11 de retournement, il est possible de réaliser une analyse optique de l'intégralité de la surface extérieure des produits.

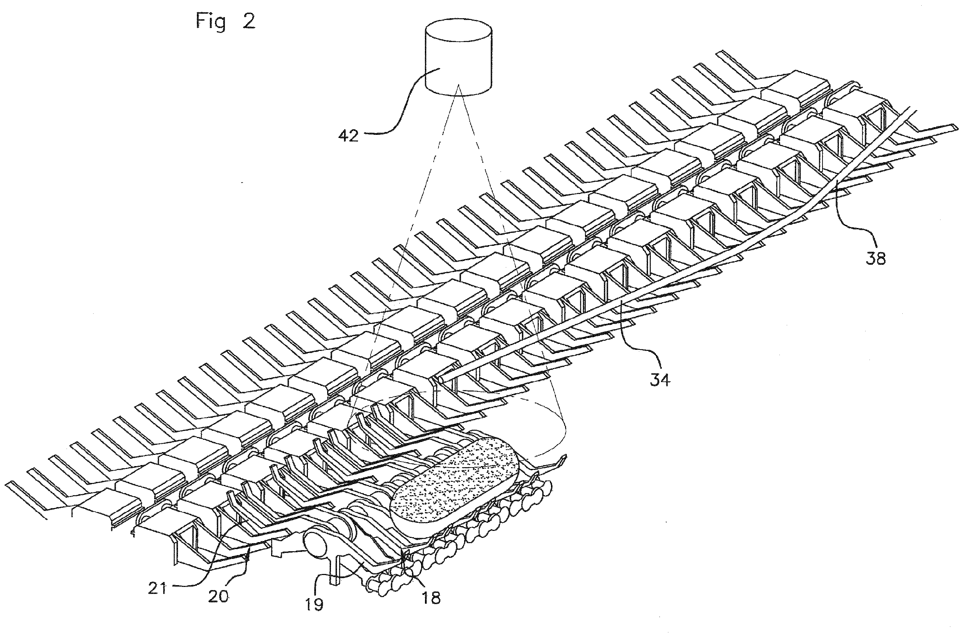

Comme représenté figure 2, le premier poste 40 d'analyse optique est situé à l'amont de la deuxième rampe 34 de retournement/saisie qui est la rampe située le plus en amont (rencontrer la première par les leviers). Le deuxième poste 41 d'analyse optique est situé à l'aval de la zone 35 de retournement, de façon à réaliser l'analyse des produits après retournement. Bien entendu, rien n'empêche de prévoir plusieurs postes d'analyse optique à l'amont et/ou à l'aval de la zone 35 de retournement, voire même en regard de la zone 35 de retournement. En particulier, rien n'empêche de prévoir un dispositif optique tel qu'une caméra située au-dessus de la zone 35 de retournement. Néanmoins, un tel dispositif d'analyse optique des produits au cours du retournement n'est en général pas utile, dans la mesure où l'exploitation des images ou signaux d'analyse optique qu'il fournit est relativement complexe (l'orientation exacte des produits dans cette zone 35 de retournement n'étant pas maîtrisée et pouvant varier d'un produit à l'autre), et surtout inutile compte tenu du fait que l'intégralité de la surface extérieure est analysée par les deux postes 40, 41 d'analyse optique situés à l'amont et à l'aval de la zone 35 de retournement. Les postes 40, 41 d'analyse optique peuvent faire l'objet de très nombreuses variantes de réalisation, et par exemple être conformes à FR2874424 et/ou FR2795499 ou autres. Rien n'empêche également de prévoir d'autres postes d'analyse des produits, par exemple un dispositif de pesage à l'amont et/ou à l'aval de la zone 35 de retournement.

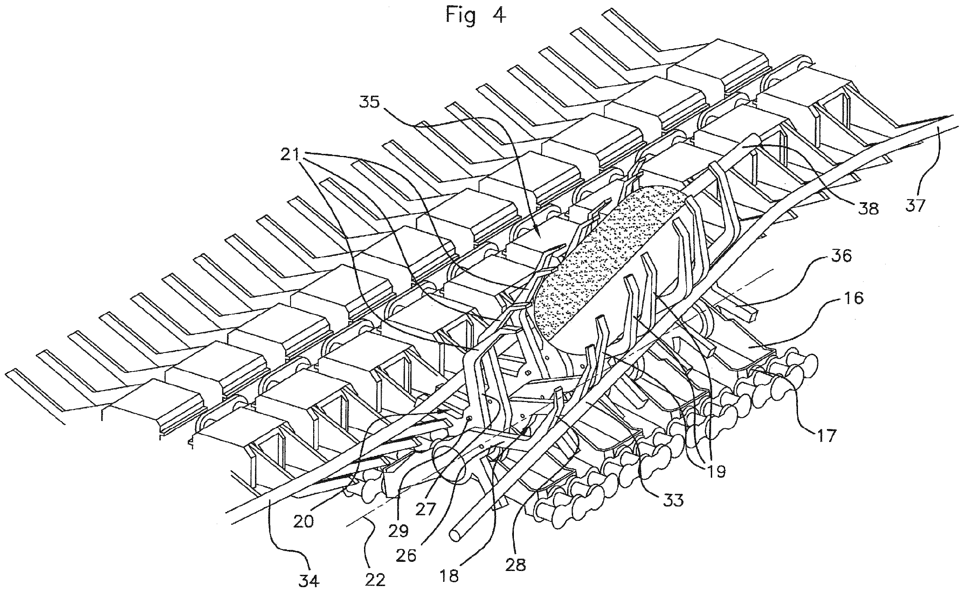

Les leviers 19, 21 basculants des deux séries de leviers sont aptes à saisir les produits entre eux en vue du retournement de ces derniers. La forme des différents leviers 19, 21 basculants et l'agencement des différentes rampes 33, 34, 37, 38 peuvent être adaptés pour permettre un maintien extrêmement précis et suffisant des produits dans la phase de retournement. Éventuellement, un certain serrage élastique des leviers 19, 21 autour des produits peut être obtenu en position de saisie des produits (figure 4) selon les positions relatives des rampes 33, 38 et des doigts 26 et des talons 36 des leviers 19, 21. Les leviers 19, 21 peuvent être même plus ou moins élastiques en flexion pour permettre un tel serrage élastique.

Après la zone 35 de retournement, les leviers 19, 21 basculants sont entraînés selon une boucle sans fin, dans leur position de support, par les chaînes 12, 13 pour revenir à l'amont de la zone 35 de retournement.

Le convoyeur 11 de retournement peut être alimenté en produits à l'amont de la zone 35 de retournement de toute manière appropriée. Il est à noter que cette alimentation n'a en particulier pas à être synchrone avec le déplacement du convoyeur 11 de retournement, et peut être effectué transversalement sur le côté de ce dernier, par exemple par une simple goulotte ou par un robot préhenseur ou de toute autre façon appropriée.

Un dispositif d'analyse optique selon l'invention peut être incorporé dans un dispositif de convoyage et de tri automatique des produits comprenant en outre un dispositif de tri des produits selon des critères de sélection prédéterminés et en fonction des signaux délivrés par le dispositif d'analyse optique des produits selon l'invention. Un tel dispositif de convoyage et de tri automatique de produits comprend au moins une unité informatique de commande recevant les signaux du dispositif d'analyse optique notamment, et commandant le basculement et le déchargement des produits dans des zones appropriées de déchargement et de tri (par exemple des canaux hydrauliques), de façon connue en soi.

Dans le mode de réalisation représenté sur les figures, les produits sont pris en charge à l'aval de la zone 35 de retournement par un convoyeur 44 de tri à doigts de convoyage tel que décrit par exemple par EP 0810963 (ou US 5998754). Il est à noter que le convoyeur 11 de retournement n'a pas à être entraîné à une vitesse strictement égale à celle du convoyeur 44 de tri. Il suffit en effet que le pas du convoyeur 44 de tri et celui des leviers 19 de la deuxième série 20 du convoyeur 11 de retournement permette d'imbriquer les leviers 19 de la deuxième série 20 du convoyeur 11 de retournement entre les doigts de convoyage du convoyeur 44 de tri.

Rien n'empêche en variante non représentée de prévoir que les deuxièmes leviers 21 de la deuxième série 20 de leviers fassent office de doigts de convoyage basculants pour le tri des produits dans des zones de déchargement situées à l'aval de la zone 35 de retournement. Ainsi le dispositif de tri selon l'invention peut comporter un unique convoyeur transportant les produits selon la direction longitudinale comprenant deux séries de leviers basculants permettant à l'amont l'analyse des produits (optique, pesage, calibre,...), avec au moins une zone de retournement, et, à l'aval, le tri par déchargement dans des zones de déchargement telles que des canaux hydrauliques ou des convoyeurs, selon les critères de tri prédéterminés. Rien n'empêche de prévoir plusieurs zones de retournement le long du convoyeur, c'est-à-dire plusieurs retournements des produits (selon les besoins des analyses à effectuer).

Dans le mode de réalisation représenté, les rampes 33, 34, 37, 38 forment un dispositif de commande du basculement des leviers basculants. Rien n'empêche en variante non représentée qu'au moins une partie des rampes soit remplacée par un dispositif de commande de basculement d'une autre nature. Par exemple chaque levier basculant de l'une au moins des deux séries peut être accouplé à un actionneur de basculement individuel (moteur électrique, électroaimant, actionneur pneumatique, actionneur hydraulique...), ce dernier étant commandé dans au moins un sens de rotation (ou dans les deux sens) par l'unité centrale informatique de commande. Le mouvement de basculement dans au moins un sens de rotation peut résulter d'un organe de rappel élastique individuel (par exemple un ressort spiral) accouplé à chaque levier basculant. Un tel dispositif d'analyse unilatérale -notamment optique- de produits selon l'invention comprend alors au moins un dispositif d'imagerie situé à l'amont de la zone 35 de retournement et adapté pour réaliser une image des produits portés par les premiers leviers 19 basculants de la première série 18 de leviers basculants, permettant à l'unité informatique de commande de déterminer et d'identifier le nombre de leviers 19 basculants portant chaque produit, et de commander les leviers appropriés (au moins deux par série et par produit) en basculement pour retourner le produit. Dans le cas d'une analyse optique, ledit premier poste 40 d'analyse optique peut faire office de dispositif d'imagerie.

Rien n'empêche également en variante non représentée que les premiers leviers 19 et les deuxièmes leviers 21 n'appartiennent pas à un seul et même convoyeur 11 de retournement, mais à deux convoyeurs distincts entraînés parallèlement l'un à côté de l'autre au moins dans la zone 35 de retournement. Ainsi, un dispositif d'analyse optique selon l'invention comprend en tout état de cause au moins un dispositif de convoyage de produits à défilement continu selon la direction longitudinale par rapport aux bâtis 30.

Plus généralement, l'invention peut faire l'objet de nombreuses variantes et modes de réalisation autre que ceux décrits ci-dessus et représentés sur les figures, aussi bien en ce qui concerne l'entraînement des produits, leur analyse, la forme et la commande des leviers de retournement... Par exemple les leviers basculants d'une même série peuvent être non pas articulés individuellement ou par groupes sur des supports successifs, mais tous portés par une même bande flexible agencée pour permettre le basculement des leviers à la façon d'une chenille. Les leviers basculants et une telle bande flexible peuvent être constitués d'une seule et même pièce (bande sans fin) découpée latéralement pour former les leviers basculants.

Le nombre et la nature des postes d'analyse peuvent varier. Par exemple le convoyeur 11 à leviers basculants peut comporter un poste de pesage permettant le pesage des produits portés par les leviers basculants (de la première et/ou de la deuxième série(s)).

L'invention peut faire également l'objet de nombreuses applications différentes, en particulier pour le tri automatique de fruits ou légumes fragiles tels que des poires ou autres produits pour lesquels les mêmes problèmes se posent. Elle s'applique plus généralement à tous produits, y compris des produits allongés (par exemple pouvant présenter une longueur pouvant être dix fois supérieure à leur plus petite dimension) et/ou des produits non fragiles.

## Revendications

1. Dispositif d'analyse unilatérale de produits comprenant un dispositif de retournement des produits comprenant deux séries (18, 20) en opposition de leviers (19, 21) basculants portés par au moins un convoyeur (11) entraîné selon une direction longitudinale par rapport à un bâti (30) fixe, et un dispositif (33, 34, 37, 38) de commande du basculement des leviers agencé pour entraîner un retournement des produits dans une zone (35) de retournement entre deux postes (40, 41) d'analyse unilatérale successifs dans la direction longitudinale, dispositif dans lequel les leviers (19, 21) de chaque série (18, 20) sont disposés les uns par rapport aux autres de telle sorte que dans la zone (35) de retournement plusieurs leviers (19, 21) d'une même série (18, 20) sont entraînés en basculement par le dispositif de commande, dispositif **caractérisé en ce que** chaque levier (19, 21) basculant forme un doigt (26) transversal de support des produits, chaque produit étant susceptible d'être retourné sous l'effet du basculement de plusieurs leviers de chaque série, et **en ce que** le dispositif (33, 34, 37, 38) de commande du basculement est agencé pour entraîner un basculement progressif desdits leviers (19, 21) basculants de chaque série (18, 20), au moins dans le sens du retournement d'un produit, de sorte que la multiplicité des leviers basculants successifs en forme de doigts de convoyage permet de supporter chacun des produits.

2. Dispositif selon la revendication 1, **caractérisé en ce que** les leviers (19, 21) basculants de chaque série (18, 20) sont disposés les uns par rapport aux autres de façon que chaque produit puisse être supporté par plusieurs leviers basculants d'une même série successifs dans la direction longitudinale.

3. Dispositif selon l'une des revendications 1 ou 2, **caractérisé en ce que** les leviers (19, 21) basculants de chaque série (18, 20) sont articulés selon des axes (22) d'articulation orientés dans la zone (35) de retournement parallèles à la direction longitudinale.

4. Dispositif selon l'une des revendications 1 à 3, **caractérisé en ce que** les leviers (19, 21) basculants de chaque série (18, 20) sont articulés selon des axes (22) d'articulation confondus les uns aux autres dans la zone (35) de retournement.

5. Dispositif selon l'une des revendications 1 à 4, **caractérisé en ce que** les leviers (19, 21) basculants des deux séries (18, 20) sont articulés sur des supports (15) communs d'un même convoyeur (11) portant et entraînant les deux séries (18, 20) de leviers basculants.

6. Dispositif selon l'une des revendications 1 à 5, **caractérisé en ce que** les leviers (19, 21) basculants des deux séries (18, 20) sont articulés selon des axes (22) d'articulation confondus les uns aux autres dans la zone (35) de retournement.

7. Dispositif selon l'une des revendications 1 à 6, **caractérisé en ce que** chaque convoyeur (11) est entraîné à défilement continu par rapport au bâti (30).

8. Dispositif selon l'une des revendications 1 à 7, **caractérisé en ce que** le basculement progressif des leviers (19, 21) basculants est assuré par des rampes (33, 34) du dispositif de commande du basculement fixées sur le bâti (30) et coopérant avec chacun des leviers (19, 21) basculants successivement au fur et à mesure de leur déplacement dans la direction longitudinale.

9. Dispositif selon l'une des revendications 1 à 8, **caractérisé en ce que** chaque levier (19, 21) basculant comprend :
- un doigt (26) transversal présentant une face (27) supérieure de support des produits et une face (28) inférieure coopérant avec une rampe, dite rampe (33, 34) de retournement/saisie du dispositif de commande du basculement, ladite face inférieure et la dite rampe de retournement/saisie étant agencées pour, au fur et à mesure du déplacement longitudinal du levier dans la zone (35) de retournement, soulever et basculer ledit doigt transversal d'une position de support des produits vers une position de retournement/saisie des produits,
- et un talon (36) coopérant avec une rampe, dite rampe (37, 38) d'ouverture/retournement du dispositif de commande du basculement, le talon (36) et ladite rampe d'ouverture/retournement étant agencés pour, au fur et à mesure du déplacement longitudinal du levier dans la zone (35) de retournement, soulever et basculer ledit doigt (26) transversal d'une position de retournement/saisie des produits vers une position de support des produits.

10. Dispositif selon l'une des revendications 1 à 9, **caractérisé en ce que**, au moins dans la zone (35) de retournement, les leviers (19, 21) basculants constituent les seuls organes de transport des produits.

11. Dispositif de convoyage et de tri automatique de produits comprenant un dispositif d'analyse unilatérale des produits, et un dispositif de tri des produits selon des critères de sélection prédéterminés et en fonction de signaux délivrés par le dispositif d'analyse unilatérale des produits, **caractérisé en ce qu'**il comporte un dispositif d'analyse unilatérale des produits selon l'une des revendications 1 à 10.

## Patentansprüche

1. Vorrichtung zur einseitigen Analyse von Produkten, umfassend eine Vorrichtung zum Wenden der Produkte, die zwei gegenüberliegende Reihen (18, 20) von Kipphebeln (19, 21) umfasst, welche von mindestens einem Förderband (11) getragen werden, das in Bezug auf ein festes Gestell (30) in einer Längsrichtung angetrieben wird, und eine Vorrichtung (33, 34, 37, 38) zum Steuern des Kippens der Hebel, die dafür eingerichtet ist, ein Wenden der Produkte in einer Wendezone (35) zwischen zwei Stationen (40, 41) zur einseitigen Analyse, die in der Längsrichtung aufeinanderfolgen, anzutreiben, wobei bei der Vorrichtung die Hebel (19, 21) jeder Reihe (18, 20) in Bezug zueinander derart angeordnet sind, dass in der Wendezone (35) mehrere Hebel (19, 21) ein und derselben Reihe (18, 20) von der Steuervorrichtung kippend angetrieben werden, wobei die Vorrichtung **dadurch gekennzeichnet ist, dass** jeder Kipphebel (19, 21) einen querliegenden Finger (26) zum Halten der Produkte bildet, wobei jedes Produkt unter dem Einfluss des Kippens mehrerer Hebel jeder Reihe gewendet werden kann, und dadurch, dass die Vorrichtung (33, 34, 37, 38) zum Steuern des Kippens dafür eingerichtet ist, ein allmähliches Kippen der Kipphebel (19, 21) jeder Reihe (18, 20) mindestens in der Richtung der Wendung eines Produkts anzutreiben, sodass es die Mehrzahl der aufeinanderfolgenden Kipphebel in Form von Förderfingern ermöglicht, jedes der Produkte zu halten.

2. Vorrichtung nach Anspruch 1, **dadurch gekennzeichnet, dass** die Kipphebel (19, 21) jeder Reihe (18, 20) in Bezug zueinander so angeordnet sind, dass jedes Produkt von mehreren Kipphebeln ein und derselben Reihe, die in der Längsrichtung aufeinanderfolgen, getragen werden kann.

3. Vorrichtung nach einem der Ansprüche 1 oder 2, **dadurch gekennzeichnet, dass** die Kipphebel (19, 21) jeder Reihe (18, 20) gemäß Gelenkachsen (22) angelenkt sind, die in der Wendezone (35) parallel zur Längsrichtung ausgerichtet sind.

4. Vorrichtung nach einem der Ansprüche 1 bis 3, **dadurch gekennzeichnet, dass** die Kipphebel (19, 21) jeder Reihe (18, 20) gemäß Gelenkachsen (22) angelenkt sind, die in der Wendezone (35) zusammenlaufen.

5. Vorrichtung nach einem der Ansprüche 1 bis 4, **dadurch gekennzeichnet, dass** die Kipphebel (19, 21) der zwei Reihen (18, 20) an gemeinsamen Halterungen (15) ein und desselben Förderbandes (11) angelenkt sind, das die zwei Kipphebelreihen (18, 20) trägt und antreibt.

6. Vorrichtung nach einem der Ansprüche 1 bis 5, **dadurch gekennzeichnet, dass** die Kipphebel (19, 21) der zwei Reihen (18, 20) gemäß Gelenkachsen (22) angelenkt sind, die in der Wendezone (35) zusammenlaufen.

7. Vorrichtung nach einem der Ansprüche 1 bis 6, **dadurch gekennzeichnet, dass** jedes Förderband (11) in Bezug auf das Gestell (30) in kontinuierlichem Umlauf angetrieben wird.

8. Vorrichtung nach einem der Ansprüche 1 bis 7, **dadurch gekennzeichnet, dass** das allmähliche Kippen der Kipphebel (19, 21) von Rampen (33, 34) der Vorrichtung zum Steuern des Kippens sichergestellt wird, die am Gestell (30) befestigt sind und mit jedem der Kipphebel (19, 21) sukzessive im Zuge deren Bewegung in der Längsrichtung zusammenwirken.

9. Vorrichtung nach einem der Ansprüche 1 bis 8, **dadurch gekennzeichnet, dass** jeder Kipphebel (19, 21) umfasst:
- einen querliegenden Finger (26), der eine obere Seite (27) zum Halten der Produkte und eine untere Seite (28) aufweist, die mit einer Rampe zusammenwirkt, welche als Wende-/Greiframpe (33, 34) der Vorrichtung zum Steuern des Kippens bezeichnet wird, wobei die untere Seite und die Wende-/Greiframpe dafür eingerichtet sind, im Zuge der Längsbewegung des Hebels in der Wendezone (35) den querliegenden Finger von einer Haltestellung der Produkte zu einer Wende-/Greifstellung der Produkte anzuheben und zu kippen,
- und einen Ansatz (36), der mit einer Rampe zusammenwirkt, welche als Öffnungs-/Wenderampe (37, 38) der Vorrichtung zum Steuern des Kippens bezeichnet wird, wobei der Ansatz (36) und die Öffnungs-/Wenderampe dafür eingerichtet sind, im Zuge der Längsbewegung des Hebels in der Wendezone (35) den querliegenden Finger (26) von einer Wende-/Greifstellung der Produkte zu einer Haltestellung der Produkte anzuheben und zu kippen.

10. Vorrichtung nach einem der Ansprüche 1 bis 9, **dadurch gekennzeichnet, dass** mindestens in der Wendezone (35) die Kipphebel (19, 21) die einigen Organe zum Transport der Produkte darstellen.

11. Vorrichtung zum Befördern und zum automatischen Sortieren von Produkten, die eine Vorrichtung zur einseitigen Analyse der Produkte und eine Vorrichtung zum Sortieren der Produkte nach vorbestimmten Auswahlkriterien und in Abhängigkeit von Signalen umfasst, die von der Vorrichtung zur einseitigen Analyse der Produkte geliefert werden, **dadurch gekennzeichnet, dass** sie eine Vorrichtung zur einseitigen Analyse der Produkte nach einem der Ansprüche 1 bis 10 umfasst.

## Claims

1. Device for unilateral analysis of products comprising a product turning device comprising two series (18, 20) of pivoting levers (19, 21) in opposition borne by at least one conveyor (11) driven in a longitudinal direction with respect to a fixed frame (30), and a device (33, 34, 37, 38) for controlling the pivoting of the levers arranged to drive a turning of the products in a turning zone (35) between two successive unilateral analysis work stations (40, 41) in the longitudinal direction, a device in which the levers (19, 21) of each series (18, 20) are arranged in relation to one another in such a way that in the turning zone (35) several levers (19, 21) of the same series (18, 20) are driven in pivoting by the control device, a device **characterised in that** each pivoting lever (19, 21) forms a transversal support finger (26) of the products,
as each product is able to be turned under the effect of the pivoting of several levers of each series, and **in that** the device (33, 34, 37, 38) for controlling the pivoting is arranged to drive a progressive pivoting of said pivoting levers (19, 21) of each series (18, 20), at least in the turning direction of a product, in such a way that the multitude of successive pivoting levers in the form of conveying fingers makes it possible to each support products.

2. Device according to claim 1, **characterised in that** the pivoting levers (19, 21) of each series (18, 20) are arranged in relation to one another in such a way that each product can be borne by several successive pivoting levers of the same series in the longitudinal direction.

3. Device according to one of claims 1 or 2, **characterised in that** the pivoting levers (19, 21) of each series (18, 20) are articulated according to axes (22) of articulation oriented in the turning zone (35) parallel to the longitudinal direction.

4. Device according to one of claims 1 to 3, **characterised in that** the pivoting levers (19, 21) of each series (18, 20) are articulated according to articulation axes (22) that are confounded with one another in the turning zone (35).

5. Device according to one of claims 1 to 4, **characterised in that** the pivoting levers (19, 21) of the two series (18, 20) are articulated on common supports (15) of the same conveyor (11) bearing and driving the two series (18, 20) of pivoting levers.

6. Device according to one of claims 1 to 5, **characterised in that** the pivoting levers (19, 21) of the two series (18, 20) are articulated along axes (22) of articulation that are confounded with one another in the turning zone (35).

7. Device according to one of claims 1 to 6, **characterised in that** each conveyor (11) is continuously driven with respect to the frame (30).

8. Device according to one of claims 1 to 7, **characterised in that** the progressive pivoting of the pivoting levers (19, 21) is provided by ramps (33, 34) of the device for controlling the pivoting fastened onto the frame (30) and cooperating successively with each one of the pivoting levers (19, 21) as they are displaced in the longitudinal direction.

9. Device according to one of claims 1 to 8, **characterised in that** each pivoting lever (19, 21) comprises:
- a transversal finger (26) having an upper face (27) for bearing products and a lower face (28) that cooperates with a ramp, referred to as the turning/grasping ramp (33, 34) of the device for controlling the pivoting, said lower face and said turning/grasping ramp being arranged to, as the longitudinal displacement of the lever takes place in the turning zone (35), raise and pivot said transversal finger from a position bearing products to a position for turning/grasping products,
- and a heel (36) cooperating with a ramp, referred to as opening/turning ramp (37, 38) of the device for controlling the pivoting, the heel (36) and said opening/turning ramp being arranged to, as the longitudinal displacement of the level takes place in the turning zone (35), raise and pivot said transversal finger (26) from a position for turning/grasping products to a position bearing products.

10. Device according to one of claims 1 to 9, **characterised in that**, at least in the turning zone (35), the pivoting levers (19, 21) constitute the only members for transporting products.

11. Device for automatic conveying and sorting of products comprising a device for the unilateral analysis of products, and a device for sorting products according to predetermined selection criteria and according to signals delivered by the device for the unilateral analysis of products, **characterised in that** it comprises a device for unilateral analysis of products according to one of claims 1 to 10.
